Europäisches Patentamt

European Patent Office

Office européen des brevets

(19)

(11) Veröffentlichungsnummer: **0 092 605**
**B2**

(12) **NEUE EUROPÄISCHE PATENTSCHRIFT**

(45) Veröffentlichungstag der neuen Patentschrift:
08.08.90

(21) Anmeldenummer: **82111342.0**

(22) Anmeldetag: **07.12.82**

(51) Int. Cl.⁵: **G 01 P 1/00,** G 01 P 3/488

(54) **Stabsensor zur Drehzahlmessung.**

(30) Priorität: **23.04.82 DE 3215212**

(43) Veröffentlichungstag der Anmeldung:
**02.11.83 Patentblatt 83/44**

(45) Bekanntmachung des Hinweises auf die
Patenterteilung:
**18.03.87 Patenblatt 87/12**

(45) Bekanntmachung des Hinweises auf die
Entscheidung über den Einspruch:
**08.08.90 Patentblatt 90/32**

(84) Benannte Vertragsstaaten:
**DE FR GB IT**

(56) Entgegenhaltungen:
DE-A-2 300 784    US-A-2 662 996
DE-A-2 548 773    US-A-3 626 227
DE-B-2 111 499    US-A-3 769 534
FR-A-2 311 307    US-A-4 262 527
GB-A-1 455 400

**Prospekt Wabco - Antiblockiersystem- Ausgabe
September 1981, Copyright: Wabco
Westinghouse Fahrzeugbremsen GmbH,
Hannover**

(73) Patentinhaber: **WABCO Westinghouse
Fahrzeugbremsen GmbH
Am Lindener Hafen 21 Postfach 91 12 80
D-3000 Hannover 91 (DE)**

(72) Erfinder: **Petersen, Erwin, Dr.
Fliederweg 22
D-3050 Wunstorf (DE)**

(74) Vertreter: **Schrödter, Manfred
WABCO Westinghouse Fahrzeugbremsen
GmbH Am Lindener Hafen 21 Postfach 91 12 80
D-3000 Hannover 91 (DE)**

EP 0 092 605 B2

**Beschreibung**

Die Erfindung bezieht sich auf einen Stabsensor zur Drehzahlmessung gemäß dem Oberbegriff des Patentanspruchs 1.

Zur Drehzahlmessung von Fahrzeugrädern werden häufig Stabsensoren verwendet. Ein solcher Sensor tastet die Drehbewegung eines gegenüberliegenden gezahnten Polrades ab. Der Stabsensor enthält einen Dauermagneten und eine Spule. Durch die Zahnung des Polrades wird der magnetische Fluß des Sensors proportional zur Radgeschwindigkeit verändert und dadurch eine elektrische Wechselspannung erzeugt. Hieraus läßt sich z.B. in einer Blockierschutz-Elektronik die Drehzahl des Rades ermitteln.

Wesentlich für die Höhe der vom Sensor abgegebenen Ausgangsspannung ist die Breite des Luftspaltes zwischen Sensor und Polrad. Zum Ausgleich von Luftspalt-Toleranzen zwischen Sensor und Polrad ist es bekannt, den Sensor in einer Bohrung mittels einer Klemmbuchse verschiebbar zu lagern (Prospekt "WABCO-Antiblokkiersystem", Ausgabe September 81). Diese Art der Lagerung hat den Vorteil einer besonders einfachen Montage. Hierbei wird der Sensor gegen die Reibungskraft der Klemmbuchse bis an das Polrad gedrückt. Der gewünschte Luftspalt stellt sich dann im Betrieb selbsttätig ein, wobei der Sensor durch das selbsttätig ein Stück zurückgedrückt wird. Die Größe der Reibkraft der Klemmbuchse ist dabei so bemessen, daß einerseits der Sensor trotz mechanischer Schwingungen, Stöße und anderer Störkräfte in seiner Lage gehalten wird, daß andererseits aber beim Gegenlaufen des Polrades ein Verschieben des Sensors ohne Zerstörung möglich ist.

Es ist nun nicht auszuschließen, daß in extremen Situationen, z.B. bei starkem Quietschen der Bremse, durch energiereiche hochfrequente Schwingungen der Sensor in der Klemmbuchse als Feder-Masse-System so schwingt, daß die statische Klemmkraft der Buchse deutlich herabgesetzt ist. Hierdurch kann der Sensor wandern und sich in unerwünschter Weise der Luftspalt zwischen Sensor und Polrad vergrößern.

Der vorliegenden Anmeldung liegt die Aufgabe zugrunde, einen Stabsensor der eingangs genannten Art so auszubilden, daß ein Wandern des Sensors und eine dadurch bewirkte Luftspaltvergrößerung vermieden wird. Stattdessen soll in solchen Fällen der Sensor auf einen geringen Luftspalt neu eingestellt werden.

Diese Aufgabe wird durch die im Patentanspruch 1 enthaltene Erfindung gelöst. Die Unteransprüche enthalten vorteilhafte Weiterbildungen.

Zur Erläuterung sind Ausführungsbeispiele der Erfindung in einer Zeichnung dargestellt. Diese zeigt schematisch im Querschnitt in

Fig. 1 einen Sensor mit vorgespanntem Anschlußkabel, in

Fig. 2 einen Sensor mit Blattfeder und in

Fig. 3 einen Sensor mit Federkappe.

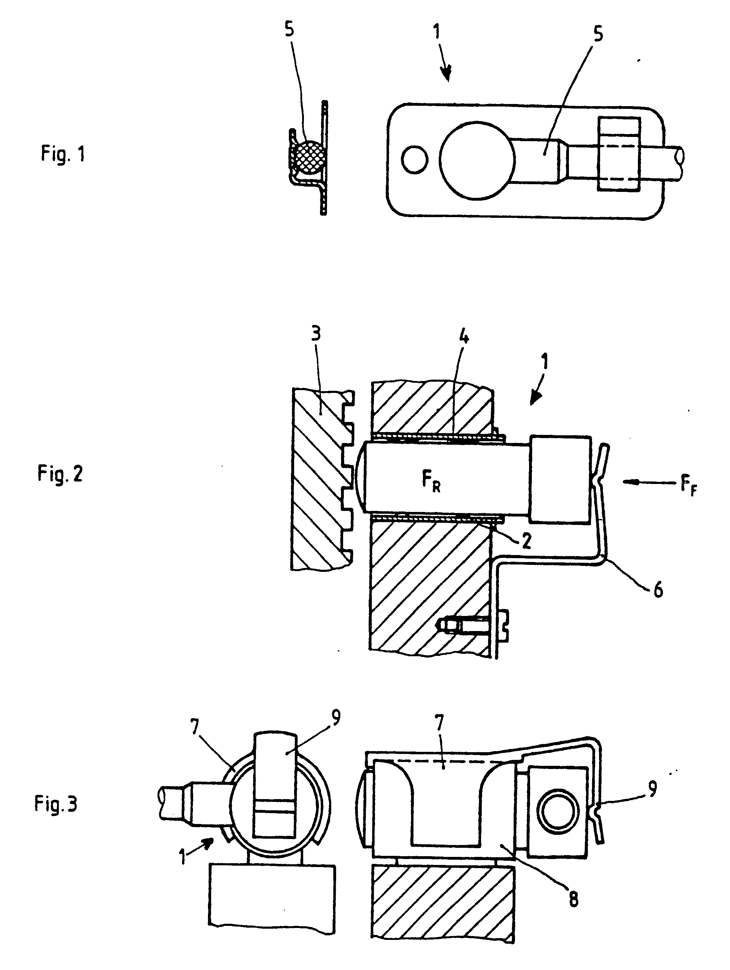

Der in Fig. 2 dargestellte Sensor 1 steckt in einer z.B. in der Bremsträgerplatte angeordneten Bohrung 2 und wird mittels einer Klemmbuchse 4 in seiner Lage gehalten. Die Klemmbuchse 4 entwickelt eine Reißkraft $F_R$. Dem Sensor 1 liegt ein Polrad 3 gegenüber. Zwischen dem feststehenden Sensor 1 und dem rotierenden Polrad 3 befindet sich ein Luftspalt.

Gemäß der Erfindung wird nun auf den Sensor 1 eine zusätzliche Kraft in Richtung zum Polrad 3 aufgebracht. Diese Federkraft $F_F$ ist kleiner als die statische Reibkraft $F_R$.

Gemäß Fig. 1 wird die Federkraft $F_F$ durch ein federnd ausgebildetes Anschlußkabel 5 erzeugt.

Gemäß Fig. 2 dient zum Erzeugen der kraft $F_F$ eine Blattfeder 6. Diese ist so ausgebildet, daß sie zur Montage oder Demontage des Sensors 1 entfernt oder verschwenkt werden kann.

Gemäß Fig. 3 dient zum Erzeugen der Kraft $F_F$ ebenfalls eine Blattfeder 9. Diese ist jedoch als einteiliges Bauteil mit einer Federkappe 7 verbunden. Die Federkappe ist über einen Sensorhalter 8 geschnappt. Diese Ausführung mit Federkappe dient gleichzeitig als Schutz für den Sensor gegen Verschmutzung und Wärmestrahlung.

Durch die erfindungsgemäßen Anordnungen stellt sich der Sensor bei der Montage und während der Fahrt auf einen bestimmten Luftspalt gegen die statischen Federkräfte $F_R$ und $F_F$ ein. Danach kann die Federkraft $F_F$ den Sensor nicht gegen die Reibkraft $F_R$ verschieben. Wird jedoch die Reibkraft $F_R$ involge von hochfrequenten Schwingungen auf einen Wert abgebaut, der kleiner als $F_F$ ist, dann verhindert die axial wirkende Feder ein Herauswandern des Sensors. Sie verschiebt statt dessen den Sensor in Richtung auf das Polrad 3, wodurch sich ein geringerer bzw. minimaler Luftspalt einstellt. Die Neueinstellung des Luftspaltes geschieht dann automatische in der eingangs beschriebenen Art.

**Patentansprüche**

1. Stabsensor zur Drehzahlmessung, insbesondere von Fahrzeugrädern, wobei der Stab des Stabsensors (1) mittels einer Klemmbuchse (4) mit einer Reibkraft $F_R$ verschiebbar in einer Bohrung gehalten wird und die Drehung eines Polrades (3) abtastet, dadurch gekennzeichnet, daß ein zusätliches federndes Element (5, 6, 7, 9) vorgesehen ist, welches auf den Stab des Stabsensors (1) eine Federkraft $F_F$ in Richtung auf das Polrad (3) ausübt, und daß im Ruhezustand die Reibkraft $F_R$ größer ist als die Federkraft $F_F$.

2. Stabsensor nach Anspruch 1, dadurch gekennzeichnet, daß als federndes Element das vorgespannte Anschlußkabel (5) des Stabsensors (1) verwendet wird.

3. Stabsensor nach Anspruch 1, dadurch gekennzeichnet, daß als federndes Element eine Blattfeder (6) verwendet wird.

4. Stabsensor nach Anspruch 1, welcher in einer Bohrung eines Sensorhalters gehalten wird, dadurch gekennzeichnet, daß als federndes Element eine Blattfeder (9) verwendet wird, die an einer Federkappe (7) befestigt ist, welche über den Sensorhalter (8) geschnappt ist.

5. Stabsensor nach Anspruch 4, dadurch gekennzeichnet, daß die axial wirkende Blattfeder (9) und die Federkappe (7) als einteiliges Bauteil ausgebildet ist.

**Revendications**

1. Détecteur à barreau (1) pour mesurer la vitesse de rotation, en particulier de roues de véhicules, dont le barreau est maintenu dans un alésage au moyen d'une douille de serrage (4) et de manière à pouvoir être déplacé à l'encontre d'une force de frottement $F_R$, le barreau détectant la rotation d'une roue polaire (3), caractérisé en ce qu'il comprend un élément élastique supplémentaire (5, 6, 7, 9) qui exerce une force de ressort $F_F$ en direction de la roue polaire (3) sur le barreau du détecteur (1) et que, à l'état de repos, la force de frottement $F_R$ est plus grande que la force de ressort $F_F$.

2. Détecteur selon la revendication 1, caractérisé en ce que l'élément élastique supplémentaire est constitué par le câble de connexion (5) du détecteur (1), câble qui est à cet effet pré-tendu.

3. Détecteur selon la revendication 1, caractérisé en ce que l'élément élastique supplémentaire est constitué par un ressort à lame (6).

4. Détecteur selon la revendication 1, maintenu dans un alésage d'un porte-détecteur, caractérisé en ce que l'élément élastique supplémentaire est constitué par un ressort à lame (9) qui est relié à un capuchon à ressort (7), lui-même emboîté avec encliquetage sur le porte-détecteur (8).

5. Détecteur selon la revendication 4, caractérisé en ce que le ressort à lame (9), agissant dans le sens axial, et le capuchon à ressort (7) sont d'un seul tenant.

**Claims**

1. Rod sensor for measuring rotational speed, especially of vehicle wheels, the rod of the rod sensor (1) being held displaceably in a bore with a frictional force $F_R$ by means of a clamping bush (4) and sensing the rotation of a magnet wheel (3), characterised in that there is provided an additional resilient member (5, 6, 7, 9) which exerts a resilient force $F_F$ on the rod of the rod sensor (1) in the direction towards the magnet wheel (3), and in that, in the rest condition, the frictional force $F_F$ is greater than the resilient force $F_F$.

2. Rod sensor according to claim 1, characterised in that there is used as the resilient member the prestressed connection cable (5) of the rod sensor (1).

3. Rod sensor according to claim 1, characterised in that a leaf spring (6) is used as the resilient member.

4. Rod sensor according to claim 1, which is held in a bore of a sensor holder, characterised in that there is used as the resilient member a leaf spring (9) which is fastened to a spring cap (7) snapped over the sensor holder (8).

5. Rod sensor according to claim 4, characterised in that the axially effective leaf spring (9) and the spring cap (7) are constructed as an integral component.

EP 0 092 605 B2

Fig. 1

Fig. 2

$F_R$

$F_F$

Fig. 3

1